# EUROPEAN PATENT APPLICATION

(11) **EP 4 425 303 A1**
(43) Date of publication of application: **04.09.2024**
(21) Application number: 23160050.3
(22) Date of filing: 03.03.2023
(51) Int. Cl.: G06F 3/01, G06T 13/40, G06T 19/00, G06T 19/20, H04N 7/15

(54) **METHOD AND SYSTEM FOR HOSTING A METAVERSE VIRTUAL CONFERENCE**

(71) Applicant: Top Victory Investments Limited, Kwun Tong, Kowloon 999077 (HK)
(72) Inventor: UMMER, Afil, 560045 Bengaluru (IN)
(74) Representative: Marks & Clerk LLP

(57) **Abstract**

A system for hosting a metaverse virtual conference (VC) includes a cloud server, at least one headset worn by a first participant, and at least one television device associated with a second participant. The television device includes a television screen, and an image capturing unit disposed on the television screen for capturing images of the second participant. The cloud server is configured to: generate a metaverse VC environment, first avatar data that indicates a first avatar associated with the first participant, and second avatar data that indicates a second avatar associated with the second participant; transmit VC content data that includes data of the metaverse VC environment, the first avatar data and the second avatar data to the headset and the television device, to enable the headset and the television device to present the metaverse VC to the first participant and the second participant, respectively.

## Description

The disclosure relates to a method and a system for hosting a metaverse virtual conference.

Recently, the needs for virtual conferences (VC) have skyrocketed. Using the VC technologies, multiple participants may be enabled to interact with one another within a virtual environment (VE) via the Internet.

The term "metaverse" is used to describe a fully immersive 3D virtual space, which includes a VE where humans are represented by avatars. Using the metaverse technologies, the humans can engage with the VE by using virtual reality (VR) or augmented reality (AR) headsets. As such, an application that a VC is realized using metaverse technologies may be desirable.

Currently, one obstacle of realizing a metaverse VC is hardware related. That is, in order to participate in the metaverse VC, all participants are required to wear the VR/AR headsets, in addition to using equipment typically used to participate in a regular VC (e.g., a personal computer, a smartphone, etc.). As such, the metaverse VC may not be available to people who are not equipped with VR/AR headsets or people who are not fit to wear VR/AR headsets.

Therefore, an object of the disclosure is to provide a system for hosting a metaverse virtual conference, that is configured to alleviate at least one of the drawbacks of the prior art.

According to an aspect of the disclosure, there is provided a system for hosting a metaverse virtual conference according to Claim 1.

Another object of the disclosure is to provide a method for hosting a metaverse virtual conference, the method being implemented by the above-mentioned system.

According to an aspect of the disclosure, there is provided a method for hosting a metaverse virtual conference according to Claim 7.

Other features and advantages of the disclosure will become apparent in the following detailed description of the embodiment(s) with reference to the accompanying drawings. It is noted that various features may not be drawn to scale.
Figure 1 is a block diagram illustrating a system that is configured to host a metaverse virtual conference (VC) according to one embodiment of the disclosure.
Figure 2 is a flow chart illustrating a method for hosting a metaverse VC according to one embodiment of the disclosure.
Figure 3 depicts an exemplary participant list screen for a metaverse VC.
Figure 4 is a schematic diagram illustrating the data transmission among a cloud server, an extended reality (XR) headset and a television device so as to conduct the VC according to one embodiment of the disclosure.
Figure 5 illustrates an exemplary metaverse VC held in an exemplary metaverse VC environment displayed by the television screen for the second participant according to one embodiment of the disclosure.
Figure 6 is an exemplary view of the exemplary metaverse VC from a point of view of a spectator.

Before the disclosure is described in greater detail, it should be noted that where considered appropriate, reference numerals or terminal portions of reference numerals have been repeated among the figures to indicate corresponding or analogous elements, which may optionally have similar characteristics.

Throughout the disclosure, the term "coupled to" or "connected to" may refer to a direct connection among a plurality of electrical apparatus/devices/equipment via an electrically conductive material (e.g., an electrical wire), or an indirect connection between two electrical apparatus/devices/equipment via another one or more apparatus/devices/equipment, or wireless communication.

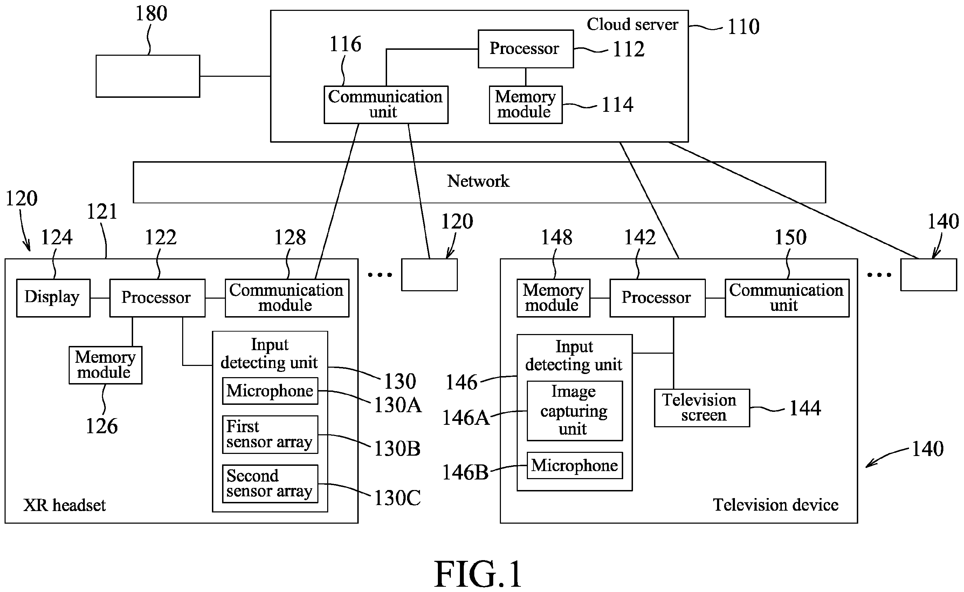

Figure 1 is a block diagram illustrating a system 100 that is configured to host a metaverse virtual conference (VC) according to one embodiment of the disclosure.

The system 100 includes a cloud server 110, at least one extended reality (XR) headset 120, and at least one television device 140. It is noted that XR includes one of virtual reality (VR), augmented reality (AR), mixed reality (MR), and any combination thereof. The XR headset 120 is to be worn by a first participant, and the television device 140 is to be associated with (e.g., watched by) a second participant. Each of the XR headset 120 and the television device 140 is configured to be in communication with the cloud server 110 via a network 150 such as the Internet. In different embodiments, additional XR headset(s) 120 and/or television device(s) 140 may be present for additional participants.

The cloud server 110 includes a processor 112, a memory module 114, and a communication unit 116.

The processor 112 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), and/or a radio-frequency integrated circuit (RFIC), etc.

The memory module 114 may be embodied using, for example, random access memory (RAM), read only memory (ROM), programmable ROM (PROM), firmware, and/or flash memory, etc. The memory module 114 stores a software application including instructions that, when executed by the processor 112, cause the processor 112 to perform operations as described below. Specifically, the software application may be a VC software application.

The communication unit 116 may include one or more of a radio-frequency integrated circuit (RFIC), a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G), the fourth generation (4G) or fifth generation (5G) of wireless mobile telecommunications technology, or the like. The cloud server 110 is configured to communicate with the XR headset 120 and the television device 140 using the communication unit 116.

The XR headset 120 may be embodied using a commercially available XR headset, and includes a frame 121, a processor 122, a display 124, a memory module 126, a communication unit 128, and an input detecting unit 130. The processor 122, the display 124, the memory module 126 and the communication unit 128 are disposed in the frame 121.

The processor 122 may include components similar to those of the processor 112 (e.g., a microprocessor) for performing the operations as described below. The display 124 may be embodied using an organic light-emitting diode (OLED) display, is connected to the processor 122 and is configured to display a virtual environment (VE). The frame 121 and the display 124 disposed therein may cooperate to form a head-mounted display. The memory module 126 includes components similar to those of the memory module 114, and stores a software application including instructions that, when executed by the processor 122, cause the processor 122 to perform the operations as described below. The communication unit 128 includes components similar to those of the communication unit 116, and enables the communication between the XR headset 120 and the cloud server 110.

The input detecting unit 130 is for detecting the movements and other inputs of a user wearing the XR headset 120. Based on different models of headsets embodying the XR headset 120, the input detecting unit 130 may include an audio collecting component (exemplified by a microphone 130A hereinafter), a first sensor array 130B and a second sensor array 130C.

The microphone 130A is disposed in the frame 121, and is for recording audio input from the first participant. The first sensor array 130B is disposed in the frame 121, and includes an accelerometer or other motion sensors to detect the movement of the frame 121 (and the movement of the head of the first participant wearing the XR headset 120). The second sensor array 130C may be disposed in a hand-held controller set to be held by the first participant in his/her hands, and may include an accelerometer or other motion sensors to detect the movement of the hand-held controller set (and the movement of the hands of the first participant). It is noted that in some embodiments, the XR headset 120 may support a hand tracking function by using specific software of image-based hand pose and gesture recognition without using the second sensor array 130C, and the second sensor array 130C may therefore be omitted.

The television device 140 includes a processor 142, a television screen 144, an input detecting unit 146, a memory module 148 and a communication unit 150. In some embodiments, the processor 142, the memory module 148 and the communication unit 150 may be integrated in a set-top box (STB) connected to the television screen 144.

The processor 142 may include components similar to those of the processor 112 (e.g., a microprocessor) for performing the operations as described below. The television screen 144 is connected to the processor 142 and is configured to display the VE. The memory module 148 includes components similar to those of the memory module 114, and stores a software application including instructions that, when executed by the processor 142, cause the processor 142 to perform the operations as described below. The communication unit 150 includes components similar to those of the communication unit 116, and enables the communication between the television device 140 and the cloud server 110.

The input detecting unit 146 may include an image capturing unit 146A and an audio collecting component (exemplified by a microphone 146B hereinafter). The image capturing unit 146A is embodied using a digital camera or a video recorder such as a webcam, a depth camera, etc., is disposed on the television screen 144 to face a viewer of the television device 140, and is configured to continuously capture images. The microphone 146B may be integrated with the STB or may be a separate component, and the microphone 146B is for recording audio input from the second participant.

In use, the first participant and the second participant may intend to meet up in an online metaverse VC, using the cloud server 110 as a host. As such, one of the first participant and the second participant may operate an electronic device (e.g., a smart phone) to communicate with the cloud server 110, so as to transmit a signal to the cloud server 110 for initiation of a metaverse VC.

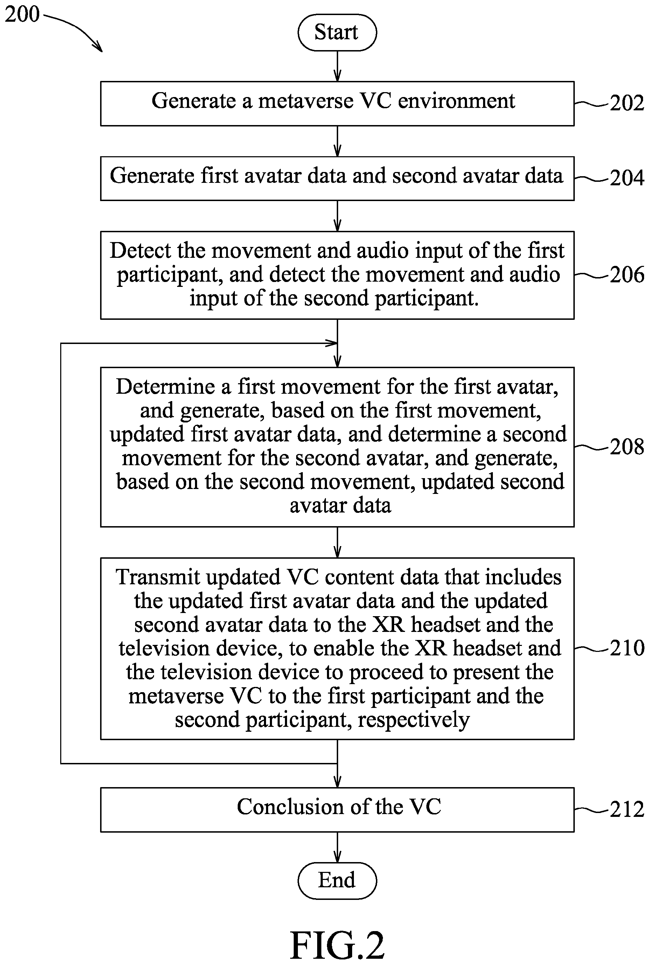

Figure 2 is a flow chart illustrating a method 200 for hosting a metaverse VC according to one embodiment of the disclosure. In this embodiment, the method 200 is implemented by the system 100 as described in Figure 1.

In step 202, in response to the receipt of the signal from one of the first participant and the second participant, the processor 112 of the cloud server 110 executes the VC software application, and generates a metaverse VC environment. In embodiments, the metaverse VC environment may be a VE in the form of a conference room.

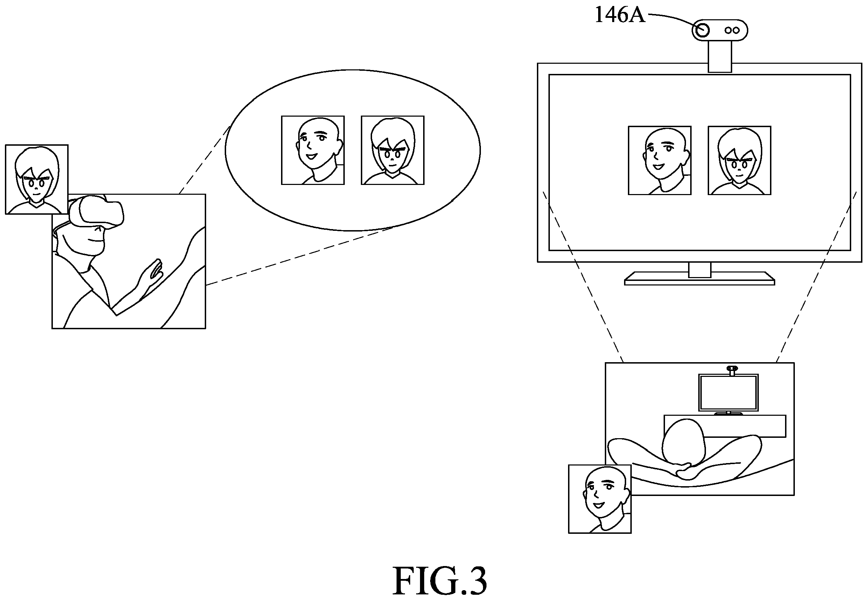

Afterward, the first participant and the second participant may join the metaverse VC by wearing the XR headset 120 and operating the television device 140, respectively. Specifically, the first participant operates an interface (not depicted in the drawings) of the XR headset 120 to communicate with the cloud server 110, and the second participant operates an interface (not depicted in the drawings) of the television device 140 to communicate with the cloud server 110. Figure 3 depicts an exemplary participant list screen for a metaverse VC. In this example, three participants are included, two of which logged in using XR headsets (and are thus first participants), and one of which logged in using a television device (and is thus a second participant). On the participant list screen, the participants may be represented using respective profile pictures of the participants.

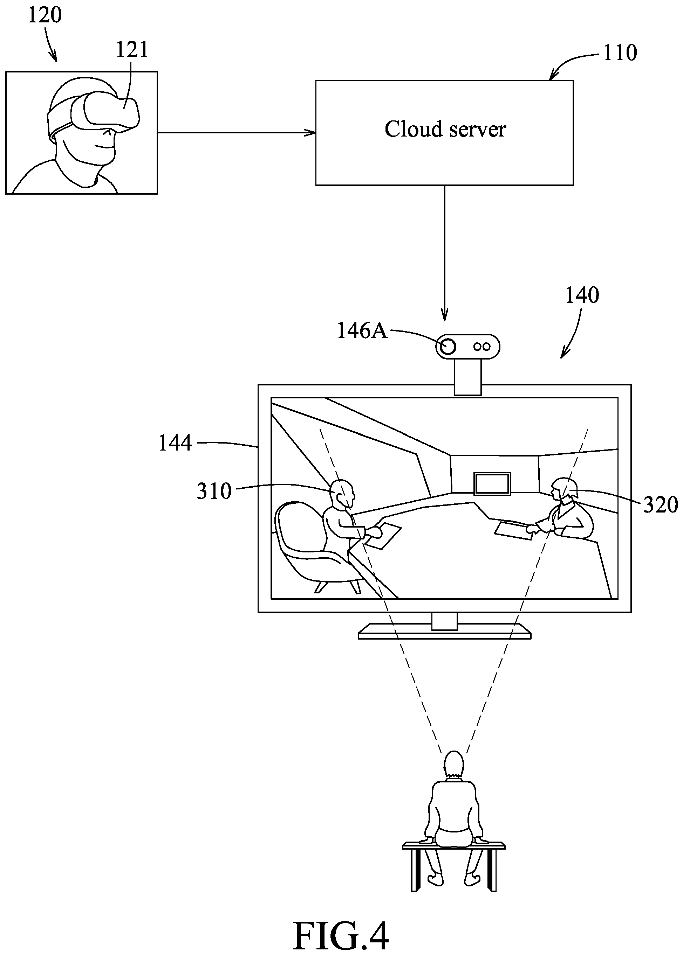

In step 204, in response to establishment of communication with the XR headset 120, the processor 112 of the cloud server 110 generates first avatar data that indicates a first avatar, that is located in the metaverse VC environment (see Figure 4) and that is associated with the first participant. Additionally, in response to establishment of communication with the television device 140, the processor 112 of the cloud server 110 generates second avatar data that indicates a second avatar, that is located in the metaverse VC environment and that is associated with the second participant.

The metaverse VC environment, the first avatar and the second avatar are then transmitted in the form of VC content data (that includes data of the metaverse VC environment, the first avatar data and the second avatar data) to both the XR headset 120 and the television device 140.

Figure 4 is a schematic diagram illustrating the data transmission among the cloud server 110, the XR headset 120 and the television device 140 so as to conduct the metaverse VC according to one embodiment of the disclosure.

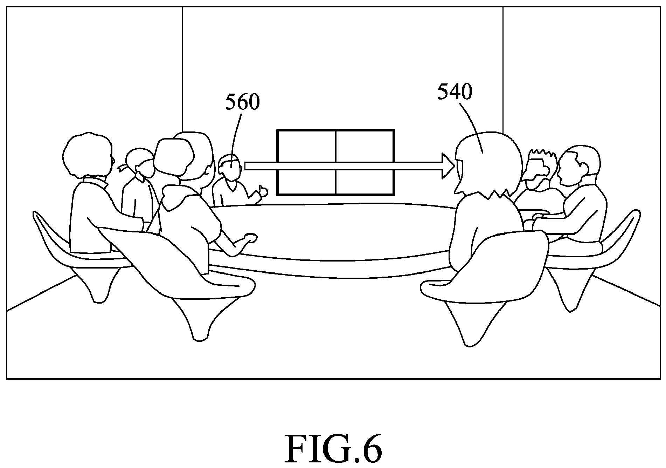

It is noted that in embodiments, a view of the metaverse VC may also be available to a number of spectators who are not participating in the metaverse VC. In use, the spectator may operate a spectator electronic device 180 (e.g., a smart phone, a personal computer, an XR headset, etc., see Figure 1) to communicate with the cloud server 110 to receive the VC content data, and may view the metaverse VC that is being conducted by the first and second avatars in the metaverse VC environment. Figure 6 is an exemplary view of an exemplary metaverse VC from a point of view of a spectator.

In response to receipt of the VC content data, the XR headset 120 is configured to display the metaverse VC environment and the first and second avatars located therein on the display 124, and the television device 140 is configured to display the metaverse VC environment and the first and second avatars located therein on the television screen 144.

After both the first avatar and the second avatar are generated, the first participant and the second participant may start interacting with each other in the VC conference by speaking, making gestures, etc. At the same time, in step 206, the input detecting unit 130 of the XR headset 120 is configured to detect the movement and audio input of the first participant, and the input detecting unit 146 of the television device 140 is configured to detect the movement and audio input of the second participant.

In the example of Figure 4, for the first participant, the microphone 130A is configured to record the audio input from the first participant to generate audio input data. The first sensor array 130B is configured to collect head movement data indicating the head movement of the first participant wearing the XR headset 120. In embodiments, the first sensor array 130B may further include an eye-tracking module, and the head movement data may further indicate an eyesight direction of the first participant. The second sensor array 130C is configured to collect hand movement data indicating hand movements of the hands of the first participant. The resulting head movement data, the audio input data and the hand movement data are then transmitted to the cloud server 110.

On the other hand, for the second participant, the image capturing unit 146A is configured to continuously capture images of the second participant in front of the television screen 144. The microphone 146B is configured to record audio input from the second participant to generate audio input data. It is noted that the second participant may be instructed to remain within a field of view of the image capturing unit 146A in order for the images captured by the image capturing unit 146A to include the second participant. The resulting images and audio input data are then transmitted to the cloud server 110.

In step 208, in response to receipt of the head movement data, the hand movement data and the audio input data from the XR headset 120, the processor 112 of the cloud server 110 determines a first movement for the first avatar based on the movement data (i.e., one of the head movement data, the hand movement data and a combination thereof), and generates, based on the first movement, updated first avatar data that indicates a movement of the first avatar in the metaverse VC environment.

For example, when the first participant wearing the XR headset 120 moves his/her head (e.g., turning 30 degrees to the right), the head movement data (indicating this 30-degree head-turn) is recorded by the first sensor array 130B and is transmitted to the cloud server 110. In response, the processor 112 of the cloud server 110 determines a first movement of the first avatar 310 (which is turning the head of the first avatar 310, 30 degrees to the right), and generates the updated first avatar data that indicates the first avatar 310 making the corresponding first movement in the metaverse VC environment.

Similarly, when the first participant moves his/her arms, the hand movement data is recorded by the second sensor array 130C, and is transmitted to the cloud server 110. In response to receipt of the hand movement data, the processor 112 determines a corresponding movement of the first avatar 310 and generates the updated first avatar data.

It is noted that the audio input data received from the microphone 130A is also included in the updated first avatar data.

In response to receipt of the images from the television device 140, the processor 112 of the cloud server 110 determines a second movement for the second avatar based on the images, and generates, based on the second movement, updated second avatar data that indicates a movement of the second avatar in the metaverse VC environment. It is noted that the audio input data received from the microphone 146B is also included in the updated second avatar data.

For example, the processor 112 of the cloud server 110 is configured to perform an image processing operation on the images to detect a human body of the second participant, and to detect a gaze position on the television screen 144 at which the second participant is looking based on the human body thus detected.

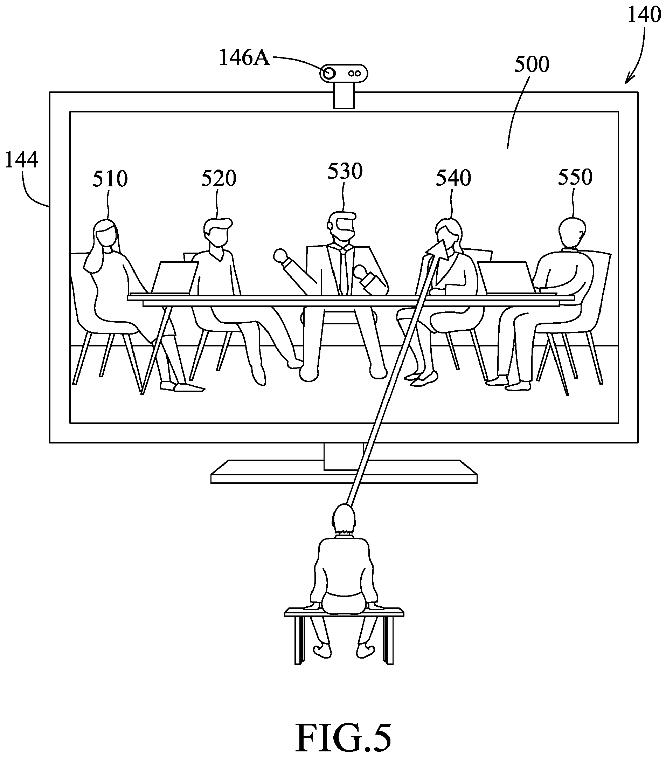

Figure 5 illustrates a metaverse VC held in an exemplary metaverse VC environment 500 displayed by the television screen 144 for the second participant according to one embodiment of the disclosure. It is noted that the metaverse VC displayed by the display 124 of the XR device 120 may be similar to the view of Figure 5.

In the metaverse VC environment 500, a number of avatars (labeled as 510 to 550) are present. The second participant may be represented by a second avatar 560 in the view of Figure 6 (i.e., the view from a spectator). When the second participant looks at one of the avatars (e.g., the avatar 540) on the television screen 144, the resulting images captured by the image capturing unit 146A may be processed by the processor 112 of the cloud server 110, so as to detect the gaze position on the television screen 144 based on a human face of the human body detected in the images. Specifically, the gaze position on the television screen 144 may be detected by calculating a location of the human face in the images, an eyesight direction, and an inclination/declination angle of the human face, etc.

After determining the gaze position, the processor 112 of the cloud server 110 determines a virtual gaze position in the metaverse VC environment 500 that corresponds with the gaze position (i.e., what object in the metaverse VC environment 500 the second participant is actually looking at), so as to determine the second movement for the second avatar 560. That is to say, the virtual gaze position may cause a head movement of the second avatar 560 that corresponds with the virtual gaze position, in order to make the second avatar 560 also "look at" the object in the metaverse VC environment 500 at which the second participant is actually looking. The head movement may serve as the second movement for the second avatar 560. Accordingly, the processor 112 generates the updated second avatar data that indicates the face of the second avatar 560 facing the virtual gaze position.

In another example, the processor 112 may determine that the second participant is first looking at the avatar 530, and then looking at the avatar 540. Accordingly, the processor 112 generates the updated second avatar data that indicates a movement of the second avatar 560 in the metaverse VC environment 500 based on the second movement (i.e., turning his/her head from looking at the avatar 530 to looking at the avatar 540). It is noted that other movements (such as walking, hand gestures, etc.) detected in the images may be processed in a manner similar to the determination of a gaze position as described above. Also, since the entire body of the second participant may be captured in the images, the updated second avatar data may be generated to further reflect postures of the second participant (e.g., whether the second participant is sitting or standing, a body pose of the second participant, etc.).

It is noted that the image processing operation may be implemented using a pre-trained neural network or other commercially available methods, and details thereof are omitted herein for the sake of brevity.

In step 210, the processor 112 transmits updated VC content data that includes the updated first avatar data and the updated second avatar data to the XR headset 120 and the television device 140, to enable the XR headset 120 and the television device 140 to proceed to present the metaverse VC to the first participant and the second participant, respectively, where the first avatar is making the first movement and speaks based on the audio input data included in the updated first avatar data, and the second avatar is making the second movement and speaks based on the audio input data included in the updated second avatar data. In embodiments, the updated VC content data is also transmitted to the spectator electronic device 180 for the spectator; in this way, the resulting changes may also be reflected in the point of view of the spectator as shown Figure 6. In the aforementioned scenario where the second participant looks at the avatar 540 on the television screen 144, from the view of the spectator and participants other than the second participant, the second avatar 560 faces the avatar 540. It is noted that in other embodiments, when one of the first participant and the second participant interacts with the metaverse VC environment and causes the metaverse VC environment to "change" (e.g., an object is picked up), the updated VC content data generated may also include updated metaverse VC environment data that reflects the change of the metaverse VC environment.

In this manner, the metaverse VC may be conducted, with the head and hand movements of the first participant, images of the second participant and audio inputs of both the first participant and the second participant being detected by the input detecting unit 130 and the input detecting unit 146, and with the corresponding head and hand movement data, images and audio input data being transmitted to the cloud server 110. In response, the cloud server 110 is configured to generate the updated first avatar data and the updated second avatar data, which are integrated into the updated VC content data for transmission to the XR headset 120 and the television device 140. The flow then goes back to step 206 to repeat the collecting the head and hand movement data, images and audio input data from the first participant and the second participant, generating the updated first avatar data and the updated second avatar data, and transmitting the updated VC content data that includes the updated first avatar data and the updated second avatar data to the XR headset 120 and the television device 140. The method may continue in this manner until the metaverse VC has concluded and is shut down by the first participant or the second participant in step 212, and then the method is terminated.

In brief, the embodiments of the disclosure provide a system and a method for hosting a metaverse VC. Using the cloud server that is configured to process not only the head and hand movement data of the first participant collected by a commercially available XR headset, but also the images of the second participant captured by the image capturing unit of the television device, various characteristics (e.g., movements, postures, etc.) for a first avatar and a second avatar are determined. In this manner, the cloud server 110 is capable of generating, in a metaverse VC environment, the first avatar that makes movements to reflect those made by the first participant, and the second avatar that makes movements to reflect those made the second participant, who is not wearing an XR headset. The resulting VC content data is then transmitted to the XR headset, the television device and additional electronic devices associated with spectators, and the metaverse VC that contains the first avatar and the second avatar located in the metaverse VC environment may be presented to the participants and the spectators, who would be unaware if any of the participants is not using the XR headset. As such, the metaverse VC may be conducted even with one or more of the participants not wearing XR headsets which are typically required for the metaverse VC.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A system (100) for hosting a metaverse virtual conference (VC), **characterized by**:
a cloud server (110) storing a VC software application therein;
an extended reality, XR, headset (120) that is in communication with the cloud server (110) and that is worn by a first participant, the XR headset (120) including an input detecting unit (130), the input detecting unit (130) including a first sensor array (130B) that is configured to collect head movement data associated with head movement of the first participant, the XR headset (120) transmitting the head movement data to the cloud server (110); and
a television device (140) that is in communication with the cloud server (110) and that is associated with a second participant, the television device (140) including a television screen (144), and an image capturing unit (146A) disposed on the television screen (144) for capturing images of the second participant, the television device (140) transmitting the images to the cloud server (110);
wherein the cloud server (110) executing the VC software application is configured to
generate
a metaverse VC environment,
first avatar data that indicates a first avatar, that is located in the metaverse VC environment, and that is associated with the first participant, and
second avatar data that indicates a second avatar, that is located in the metaverse VC environment, and that is associated with the second participant,
transmit VC content data that includes data of the metaverse VC environment, the first avatar data and the second avatar data to the XR headset (120) and the television device (140), to enable the XR headset (120) and the television device (140) to present the metaverse VC that contains the first avatar and the second avatar located in the metaverse VC environment to the first participant and the second participant, respectively,
continuously receive the head movement data from the XR headset (120), determine a first movement for the first avatar based on the head movement data, and generate, based on the first movement, updated first avatar data that indicates a movement of the first avatar in the metaverse VC environment,
continuously receive the images from the television device (140), determine a second movement for the second avatar based on the images, and generate, based on the second movement, updated second avatar data that indicates a movement of the second avatar in the metaverse VC environment, and
continuously transmit updated VC content data that includes the updated first avatar data and the updated second avatar data to the XR headset (120) and the television device (140), to enable the XR headset (120) and the television device (140) to proceed to present the metaverse VC to the first participant and the second participant, respectively.

2. The system (100) as claimed in Claim 1, **characterized in that** the cloud server (110) is configured to, in response to receipt of the images:
perform an image processing operation on the images to detect a human body of the second participant;
detect a gaze position on the television screen at which the second participant is looking;
determine a virtual gaze position in the metaverse VC environment that corresponds with the gaze position and a head movement that corresponds with the virtual gaze position and that serves as the second movement; and
generate the updated second avatar data that indicates a face of the second avatar facing the virtual gaze position.

3. The system (100) as claimed in any one of Claims 1 and 2, **characterized in that**:
the television device (140) further includes an audio collecting component (146A) that is configured to receive audio input from the second participant to generate audio input data, the television device (140) transmitting the audio input data to the cloud server (110); and
the cloud server (110) is configured to, in response to receipt of the audio input data, generate the updated second avatar data to include the audio input data.

4. The system (100) as claimed in any one of Claims 1 to 3, **characterized in that**:
the input detecting unit (130) of the XR headset (120) further includes an audio collecting component (130A) that is configured to receive audio input from the first participant to generate audio input data, the XR headset (130) transmitting the audio input data to the cloud server (110); and
the cloud server (110) is configured to, in response to receipt of the audio input data, generate the updated first avatar data to include the audio input data.

5. The system (100) as claimed in Claim 4, **characterized in that**:
the input detecting unit (130) of the XR headset (120) further includes a second sensor array (130C) that is configured to collect hand movement data indicating hand movements of the hands of the first participant, the XR headset (120) transmitting the hand movement data to the cloud server (110); and
the cloud server (110) is configured to, in response to receipt of the hand movement data, generate the updated first avatar data further based on the hand movement data.

6. The system (100) as claimed in any one of Claims 1 to 5, the cloud server (110) being in communication with a spectator electronic device (180) associated with a spectator, **characterized in that**:
the cloud server (110) is further configured to transmit the VC content data and the updated VC content data to the spectator electronic device (180), to enable the spectator electronic device (180) to proceed to present the metaverse VC to the spectator.

7. A method for hosting a metaverse virtual conference (VC), the method being implemented using a cloud server (110) storing a VC software application therein, at least one extended reality, XR, headset (120) that is in communication with the cloud server (110) and that is worn by a first participant, and at least one television device (140) that is in communication with the cloud server (110) and that is associated with a second participant, the XR headset (120) including an input detecting unit (130), the input detecting unit (130) including a first sensor array (130B) that is configured to collect head movement data associated with head movement of the first participant, the XR headset (120) transmitting the head movement data to the cloud server (110), the television device (140) including a television screen (144), and an image capturing unit (146A) disposed on the television screen (144) for capturing images of the second participant, the television device (140) transmitting the images to the cloud server (110), the method being **characterized by**:
generating, by the cloud server (110) executing the VC software application,
a metaverse VC environment,
first avatar data that indicates a first avatar, that is located in the metaverse VC environment, and that is associated with the first participant, and
second avatar data that indicates a second avatar, that is located in the metaverse VC environment, and that is associated with the second participant,
transmitting VC content data that includes data of the metaverse VC environment, the first avatar data and the second avatar data to the XR headset (120) and the television device (140),
presenting, by the XR headset (120) and the television device (140), the metaverse VC that contains the first avatar and the second avatar located in the metaverse VC environment to the first participant and the second participant, respectively,
continuously receiving, by the cloud server (110), the head movement data from the XR headset (120), determining a first movement for the first avatar based on the head movement data, and generating, based on the first movement, updated first avatar data that indicates a movement of the first avatar in the metaverse VC environment,
continuously receiving, by the cloud server (110), the images from the television device (140), determining a second movement for the second avatar based on the images, and generating, based on the second movement, updated second avatar data that indicates a movement of the second avatar in the metaverse VC environment,
continuously transmitting, by the cloud server (110), updated VC content data that includes the updated first avatar data and the updated second avatar data to the XR headset (120) and the television device (140), and
presenting, by the XR headset (120) and the television device (140), the metaverse VC to the first participant and the second participant, respectively.

8. The method as claimed in Claim 7, **characterized in that**:
the determining of the second movement for the second avatar includes:
performing an image processing operation on the images to detect a human body of the second participant;
detecting a gaze position on the television screen at which the second participant is looking; and
determining a virtual gaze position in the metaverse VC environment that corresponds with the gaze position and a head movement that corresponds with the virtual gaze position and that serves as the second movement; and
the generating the updated second avatar data includes generating the updated second avatar data that indicates a face of the second avatar facing the virtual gaze position.

9. The method as claimed in any one of Claims 7 and 8, the television device (140) further including an audio collecting component (146A) that is configured to receive audio input from the second participant to generate audio input data, the method further **characterized by**:
transmitting, by the television device (140), the audio input data to the cloud server (110); and
in response to receipt of the audio input data, generating, by the cloud server (110), the updated second avatar data to include the audio input data.

10. The method as claimed in any one of Claims 7 to 9, the input detecting unit (130) of the XR headset (120) further including an audio collecting component (130A) that is configured to receive audio input from the first participant to generate audio input data, the method further **characterized by**:
transmitting, by the XR headset (120), the audio input data to the cloud server (110); and
in response to receipt of the audio input data, generating, by the cloud server (110), the updated first avatar data to include the audio input data.

11. The method as claimed in Claim 10, the input detecting unit (130) of the XR headset (120) further including a second sensor array (130C) that is configured to collect hand movement data indicating hand movements of the hands of the first participant, the method further **characterized by**:
transmitting, by the XR headset (120), the hand movement data to the cloud server (110); and
in response to receipt of the hand movement data, generating, by the cloud server (110), the updated first avatar data further based on the hand movement data.

12. The method as claimed in any one of Claims 7 to 11, the cloud server (110) being in communication with a spectator electronic device (180) associated with a spectator, the method further **characterized by**:
transmitting, by the cloud server (110), the VC content data and the updated VC content data to the spectator electronic device (180), so as to enable the spectator electronic device (180) to proceed to present the metaverse VC to the spectator.
